# EUROPEAN PATENT APPLICATION

(11) **EP 3 321 073 A1**
(43) Date of publication of application: **16.05.2018**
(21) Application number: 16290216.7
(22) Date of filing: 09.11.2016
(51) Int. Cl.: B29C 65/42, F17C 1/16

(54) **METHOD FOR MANUFACTURING A PRESSURE VESSEL FOR AUTOMOTIVE APPLICATIONS AND PRESSURE VESSEL**

(71) Applicant: Mann+Hummel GmbH, 71638 Ludwigsburg (DE)
(72) Inventor: Sarrazin, Maxime, 53260 Entrammes (FR); Migaud, Jérôme, 35500 Vitré (FR); Voegele, Christophe, 53470 Sacé (FR); Warnery, Stéphane, 35200 Rennes (FR)
(74) Representative: Seyboth, Matthias

(57) **Abstract**

The invention relates to a pressure vessel and a method for manufacturing such having one or several chambers (30) for storing compressed air or gas, in particular for automotive applications, comprising the following steps: Injection molding a first housing shell (20) and a second housing shell (22) from a thermoplastic material and mounting, on the inside of the free edge section (38) of each chamber section (34a) of the first housing shell (20), a supporting ring (42) for a radial support of the free edge section (38) thereof; The free edge section (38) of the first housing shell (20) is then fitted into the free edge section (40) of the second housing shell (22) such that the free edge section (38) of the second housing shell (40) encompasses the free edge section (38) of the first housing shell (20). The two housing shells (20, 22) are then fused together in the region of their interlocking free edge sections (38, 40) by hot gas welding and pressure-injecting hotmelt thermoplastic material (70) through the defect holes (60) of the free edge section of the second housing shell (22) into the cavity (56) thereby forming the pressure vessel (10). The invention further relates to a pressure vessel (10) for automotive applications.

## Description

### Technical Field

The invention relates to a method for manufacturing a pressure vessel for automotive applications and a pressure vessel.

### Prior Art

Pressure vessels are containers which are designed to hold gases or liquids at a pressure substantially different from the ambient pressure.

In the compressed air brake systems used in large heavy vehicles such as trucks and buses, compressed air is stored in pressure vessels to apply pressure to the brake pad when needed to stop the vehicle. Said pressure vessels need to withstand high pressure differentials of up to 15 bars ± 5 bars during normal use and are, therefore, generally made of metal. To manufacture a cylindrical or spherical pressure vessel of metal, rolled and possibly forged parts would have to be welded together. Some pressure vessels are made of composite materials, such as filament wound composite using carbon fibers embedded in a polymer. Due to the very high tensile strength of carbon fiber these vessels can be very lightweight, but are much more difficult to manufacture. The composite material may also be wound as a "hoop wrap" around a metal liner, forming a composite overwrapped pressure vessel. The lining prevents leaking and protects the structure of the vessel from the contained medium and may carry a significant portion of the pressure load. A pressure vessel specifically for automotive applications is, for instance, known from WO 2014/106704 A1. The known pressure vessel has a main body with cylindrical chambers and which are closed by a separate cover or cap that needs to be fastened to the main body in a gas-tight fashion. Also, the material employment required for manufacturing of the known pressure vessel is rather extensive (high).

The aforesaid manufacturing methods for pressure vessels are all rather costly and do not allow for more complex forms of the pressure vessel which would allow for a wider range of possible applications.

It is, therefore the object of the invention to provide a less expensive method for manufacturing a pressure vessel and by which more complex designs of the pressure vessel can be achieved with ease. It is yet a further object of the invention to provide such a pressure vessel, in particular for storing compressed air or gas for the automotive sector.

The object of the invention regarding the method for manufacturing a pressure vessel is solved by the method according to claim 1. The pressure vessel according to the invention is characterized by the features of claim 11. Preferred embodiments of the invention are subject of the description as well as the dependent claims.

### Disclosure Of The Invention

The method for the manufacture a pressure vessel for storing compressed air or gas, in particular for automotive applications, according to the invention comprises the following steps:
a) Injection molding a first housing shell and a second housing shell from a thermoplastic material, each of the housing shells defining one or several chamber section therein and having a free edge section, wherein the free edge sections of the first housing shell is configured and designed to be fitted into the free edge section of the second housing shell under formation of a cavity extending there between, and wherein at least the free edge section of the second housing shell is provided with defect holes;
b) Mounting, on the inside of the free edge section of each chamber section of the first housing shell, a supporting ring for a radial support of the free edge section thereof;
c) Fitting (inserting/mounting) the free edge section of the first housing shell into the free edge section of the second housing shell such that the free edge section of the second housing shell (40) encompasses the free edge section of the first housing shell;
d) Fusing the two housing shells together in the region of their interlocking free edge sections by hot gas welding and pressure-injecting hotmelt thermoplastic material through the defect holes of the free edge section of the second housing shell into the cavity thereby forming the pressure vessel.

The manufacturing method according to the invention allows a simplified and cost-effective manufacture of pressure vessels that can reliably withstand the pressure loads normally encountered in automotive applications. The pressure vessels obtained by the method according of the invention are, for instance, suitable for storing compressed air as required for compressed air brake systems or for charging a combustion engine. Further the method according to the invention allows manufacture of a pressure vessel in a much greater variety of shapes from just two compatible housing shells and with a minimal material input. Provision of pressure vessels suitable for rather complex mounting spaces as are normally found in the engine compartment or in the underframe area of vehicles is thereby made possible. As the housing shells consist of a thermoplastic material, these can be easily obtained by an injection molding process. Overall, the method according to the invention is predestined for a mass fabrication of pressure vessels. The supporting ring or supporting rings which are mounted on the inside of the first housing shell allow for injection of the hotmelt thermoplastic material with high pressures. This ensures an optimal bonding of the thermoplastic material with both the first and second housing shell. For the hot gas welding, one or more jets of hot air may be used. The thermoplastic material of the housing shells, is softened by said jet(s) of hot air to allow for a full bonding of the free edge sections as well as the hotmelt thermoplastic material with the free edge sections to take place. The hotmelt thermoplastic material thus serves as a filler material that cools to form a joint that can be as strong, or even stronger, than the material of the two housing shells. Thereby, a pressure-tight fusion of the two housing shells can be realized.

To further increase the compression strength of the housing wall of the housing shells, there may be short or long fibers or a combination thereof provided in the thermoplastic material used for injection molding of the two housing shells. The fibers are thus blended in the thermoplastic material and may e.g. comprise glass fibers, carbon fibers, or other natural or synthetic fibers. Likewise, the hotmelt thermoplastic material injected into the cavity may contain such fibers.

The mounting of each of the supporting rings may be done after the injection-molding process of the first and second housing shell. The supporting rings may be, in particular, press-fitted into the first housing shell. Alternatively, the first housing shell may be directly injection-molded on the respective supporting rings. Thereby, the first housing shell may be fabricated and equipped with the supporting ring in a one-step process. This allows for a further reduction of manufacturing costs and is particularly suitable for a mass-production of the pressure vessel. The said supporting ring(s) allow(s) for a stiffening of the free edge section of the first housing shell to thereby withstand even high forces directed in a radial direction during the welding process. This also ensures a form stability of the two housing shells in the welding area such that the hot melt thermoplastic material, during injection into the gap or cavity formed between the interlocked free edge sections of the two housing shells such does not leak from the cavity in an uncontrolled manner. Consequently, a pressure build-up of the hot melt in the cavity as required for a perfect weld result may be more easily obtained.

According to a preferred embodiment of the invention, the first housing shell and the second housing shell are each injection molded such that they each form a shoulder for an axial abutment of the free edge section of the respective other housing shell and wherein the edge section of the first housing shell is fitted, prior to welding said housing shells together, into the edge section of the second housing shell until the free edge section of each housing shell abuts against the shoulder of the respective other housing shell corresponding thereto in an axial direction. Thereby, a predetermined (optimal) relative position of the two housing shells for their fusing can be more easily obtained. Further, by the mutual abutment of the two housing shells in an axial direction, an undesirable leakage of the hot melt thermoplastic material injected into the cavity can be reliably prevented. This also allows for a desired pressure build-up of the hot melt thermoplastic material in the cavity which propagates a desired wetting of the surfaces of the two housing hells to be welded together.

According to yet another embodiment of the invention, the first housing shell and the second housing shell each have chamber section, wherein adjacent chamber sections of the respective housing shell are separated from each other by a partition wall section or segment, wherein the partition wall section of at least one of the housing shells may be provided with a through hole for a fluidic connection of the several chambers of the pressure vessel. Thereby, the number of fluid ports of the pressure vessel can be reduced.

According to a yet further embodiment of the invention, the chambers of the first and/or the second housing shell differ from each other in their axial depth or length. This allows for manufacture of a pressure vessel with a stepped design or shape by which even mounting spaces in a vehicle which had to remain unused due to their complexity up to now, can now be used for installation of a pressure vessel.

According to a yet further embodiment of the invention, at least part of the chamber sections of the first and the second housing shell corresponding to each other have different diameters. This allows for an even greater variety of shapes and sizes of the pressure vessels and thus for an even wider range of applications.

According to the invention, each chamber of the housing shells preferably has a circular cross-section. Thereby, the pressure vessel can be designed to withstand a given maximum (filling) pressure with a minimum of thermoplastic material used.

For reasons of a high load-bearing capacity of the supporting ring, the supporting ring is preferably made of metal. Alternatively, the supporting ring may be made of a duroplast.

According to the invention, the supporting ring preferably has an axial extension which is at least equal to the length of the circular cavity in an axial direction. Thereby, the free edge section of the first housing shell which is subjected to high radial forces during the welding process can be optimally supported. The risk of damage to the first housing shell during the manufacturing process can be reduced. Overall, an off-quality production can thereby be minimized.

The pressure vessel for storing compressed air or gas, in particular for automotive applications is manufactured according to a method as described above. According to a preferred embodiment of the pressure vessel, the pressure vessel has several vessel sections arranged side-by-side, each vessel section defining a chamber for the compressed gas. The vessel sections may differ from each other in their respective length and/or outer diameter. Further, the pressure vessel may have several fluid ports. The fluid ports may be provided at the same or at different vessel sections of the pressure vessel.

### Brief Description Of The Drawings

The objects and advantage of the invention will be apparent upon consideration of the following detailed description, taken in conjunction with the accompanying drawings, in which like reference characters refer to like parts throughout, and in which:
- Fig. 1: shows a first embodiment of a pressure vessel for storing a compressed fluid which comprises two housing shells fused together in the region of a weld zone by combined hot gas welding and injection of hotmelt thermoplastic material in between the two housing shells, in a side view;
- Fig. 2: shows the pressure vessel according to Fig. 1 in a longitudinal section;
- Fig. 3: shows a detailed section of the pressure vessel according to Fig. 1 after hot gas welding but prior to injection of thermoplastic welding material;
- Fig. 4: shows a detailed section of the pressure vessel according to Fig. 1 with the two housing shells fused together; and
- Fig. 5: shows a cross-section of the pressure vessel according to Fig. 1;
- Fig. 6: shows a second embodiment of a pressure vessel according to the invention comprising only two housing shells fuse together and which has a highly complex shape, in a perspective side view; and
- Fig. 7: shows a method for manufacturing a pressure vessel for storing compressed gas as shown in Figures 1 to 5;
- Fig. 8: shows a third embodiment of a pressure vessel according to the invention with a fluid rail integrally formed with a housing shell, in a side view;
- Fig. 9: shows an upper region of the pressure vessel of Fig. 8 in a sectional view.

### Detailed Description of the Disclosure

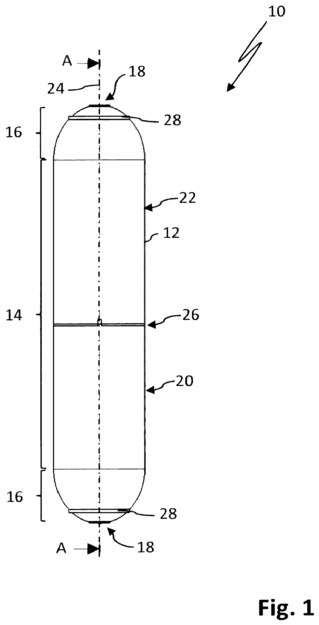

**Fig. 1** shows a pressure vessel **10** for storing compressed air or gas, in particular for charging a combustion engine in automotive applications. The pressure vessel 10 has a housing wall **12** which forms a cylindrical middle section **14** and dome shaped end sections **16.** At least one of the dome shaped end sections 16 has a fluid port **18** for connection of a pipe, tubing or other fluid line thereto and through which the air or gas can be introduced into and vented from the pressure vessel 10. Alternatively, both end sections 16 may be provided with a fluid port 18. The fluid ports 18 may be provided with a screw thread, a bayonet connection or the like for a safe connection of the said fluid line (not shown).

The pressure vessel 10 comprises a first housing shell **20** and a second housing shell **22** which are fused together. The two housing shells 20, 22 are both aligned in the direction of the longitudinal axis **24** of the pressure vessel 10. The housing shells 20, 22 are both injection molded parts composed of a thermoplastic material. The housing shells 20, 22 may be reinforced with short or long fibers which are, however, embedded in the thermoplastic material in a disorderly manner and which are thus not organized as a roving, a fibrous layer, a textile or the like. The said housing shells 20, 22 are welded to one another in the region of a weld zone **26** along their complete circumference. The pressure vessel 10 may be provided with one or more flat areas (collars) 28 to improve the support of the housing shells 20, 22 during the welding process.

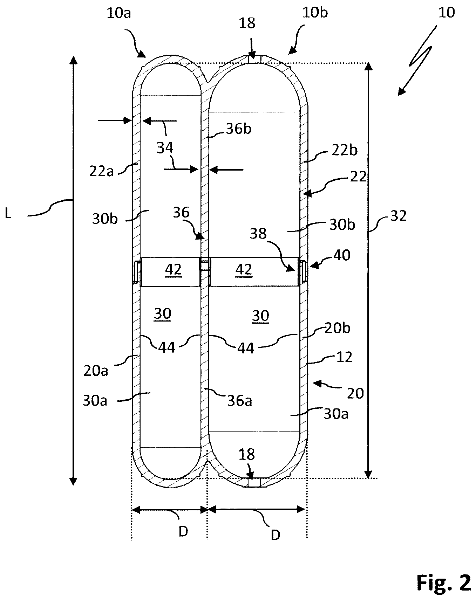

**In** **Fig. 2** the pressure vessel 10 according to Figure 1 is shown as a whole in a longitudinal section thereof along cutting line A-A as depicted in Figure 1. The pressure vessel 10 comprises vessel sections 10a, 10b which are arranged side-by-side and which show the same overall external length **L** but different external diameters **D.** It is to be understood, that the vessel sections may differ from each other in their length. Also, the vessel sections may have the same external diameters D. The pressure vessel 10 has two internal chambers **30** for storing the gas or compressed air. The two chambers 30 have approximately the same overall axial length **32.**

Each housing shell 20, 22 has shell sections **20a, 20b; 22a, 22b** which define chamber sections **30a, 30b** of the chambers 30. The housing wall 12 shows a constant nominal wall thickness **34.** The chambers 30 are separated from each other by a partition wall **36** formed by respective partition wall sections **36a, 36b** of each housing shell 20, 22. The partition wall 36 thus delimits both chambers 30 of the pressure vessel 10.

The housing shells 20, 22 are fitted into each other with their free edge sections **38, 40** such that the free edge sections 38, 40 overlap one another in a radial direction. The (upper) second housing shell 22, with its free edge section 40, encompasses the free edge section 38 of the first housing shell 20 over its entire circumference. On the inside of the free edge section 38 of the first (lower) housing shell 20, there are supporting rings **42** provided in each of the chamber sections 34a which serve to support the said free edge section 38 of the first housing section 20 in a radial direction thereof. Each supporting ring 42 is dimensioned and configured such that it directly contacts an interior surface **44** of the first housing shell 20, preferably, over its whole circumference.

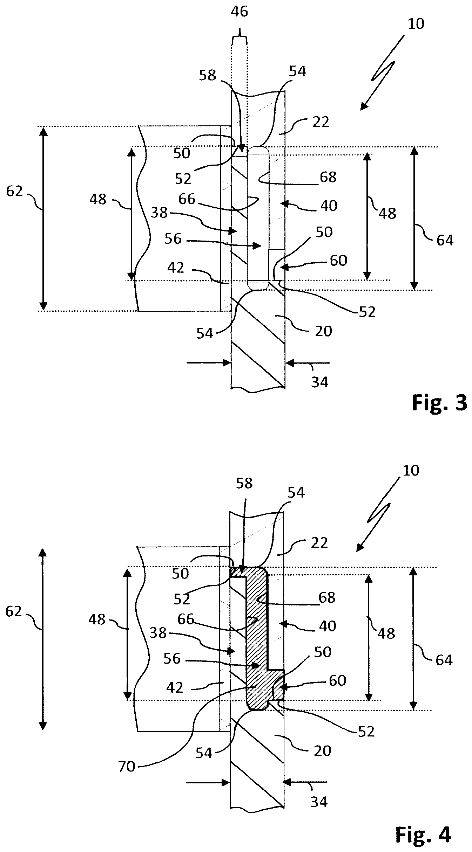

In **Fig. 3****,** there is a detailed cut out of the edge sections 38, 40 of the housing sections 20, 22 shown with the housing sections 20, 22 being hot gas welded, but prior to injection of thermoplastic welding material (cf. Fig. 4).

The free edge sections 38, 40 of the housing shells both comprise an axial wall projection with a wall thickness **46** and an axial length **48.** The wall thickness 46 is smaller than the nominal wall thickness 34 of the housing wall 12 of each of the hosing shells 20, 22. There is a shoulder **50** formed on each housing shell 20, 22 for an axial abutment of a free edge **52** of the free edge section 38, 40 of the respective other housing shell 20, 22. The free edge section 38, 40 of the first housing shell 20 is fitted into the free edge section 40 of the second housing shell 22 such that the free edge 52 of each housing shell 20, 22 abuts against the shoulder 50 of the respective other housing shell 20, 22 in an axial direction. Each housing shell 20, 22 has a groove-shaped end face **54** which extends from its shoulder 44 to its free edge section 38, 40 in a radial direction thereof. The groove-shaped end face 54 allows for an increased contact surface of the housing shells 20, 22 with respect to their joining together.

There is a circumferential cavity **56** formed in between the overlapping free edge sections 38, 40 of the two housing shells 20, 22. Further, there are first through or defect holes **58** provided in the fee edge section 38 of the first housing shell 20. The free edge section 40 of the second housing shell 22 has second through or defect holes **60.** The second defect holes 60 of the second housing shell 22 serve for an injection of hotmelt thermoplastic (welding) material into the cavity 56 formed in between the two housing shells 20, 22 during the welding process of the two housing hells 20, 22. Note that in Fig. 3 the cavity 56 is not filled with hotmelt thermoplastic material. The first defect holes 58 of the first housing shell 20 in particular facilitate driving out air or gas from the cavity during the fusing or welding process. The risk of pores formed within the welding material during the welding process is thereby greatly reduced.

As can be seen from Figure 3, the supporting ring 42 has an axial height **62** that is larger than the extension **64** of the cavity 56 in an axial direction. It needs to be noted that the said first defect holes 58 of the free edge section 38 of the first housing shell 20 are covered in a radial direction by the supporting ring 42. However, the supporting ring 42 preferably does not close off the first defect holes 58 in a gas-tight manner but rather serves to prevent an undesired extrusion of the hot melted welding material into the main chamber of the pressure vessel 10. The supporting rings 42 can, in particular, each be seated within the first housing shell 20 of the pressure vessel 10 in a press-fitted manner.

To ensure a high load-bearing capacity of the supporting ring 42 in the radial direction, the supporting ring 42 is preferably made from metal, a duroplast, a composite material or any other suitable material with a high modulus of elasticity.

The circumferential cavity 56 formed in between the free edge section 38, 40 of the two housing shells 20, 22 is directly limited in a radial direction by an exterior wall surface **66** of the free edge section or the first housing shell and an interior wall surface **68** of the free edge section 40 of the second housing shell 22. In an axial direction, the cavity is directly limited by the groove-shaped end faces 54 of the first and second housing shell 20,22.

In **Fig. 4****,** there is a detailed cut out of the edge sections 38, 40 of the housing sections 20, 22 shown in their welded state. The circumferential cavity 56 is fully filled with thermoplastic welding material **70** which firmly bonds the free edge sections 38, 40 as well as the groove-shaped end faces 54 of the of the interlocking housing shells 20, 22 together. The thermoplastic welding material 70 may partially or completely fill out first and second defect holes 58, 60 of the housing shells 20, 22. The thermoplastic welding material 70 can have the same density as or a different, in particular greater, density than the material of the housing wall 12 of the pressure vessel 10.

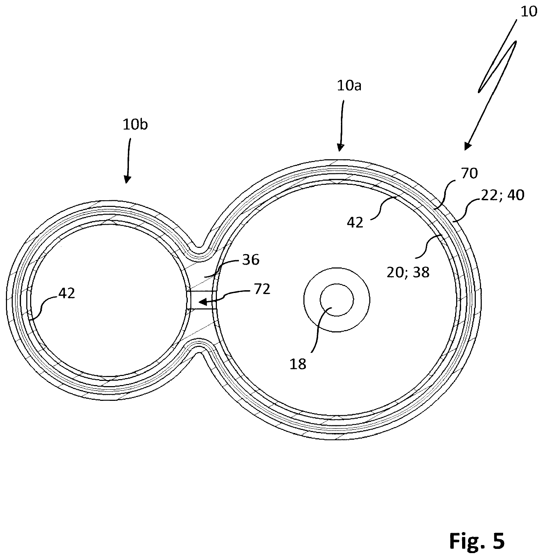

**Fig. 5** shows a cross section of the pressure vessel 10 in the region of the weld zone 28. The interlocking free edge regions 38, 40 of the housing shells, the partition wall 36 and the supporting rings 42 can be clearly seen. The circumferential cavity 56 between the overlapping free end sections 38, 40 of the housing shells 20, 22 is constricted to the inside in the region of the partition wall 36. The circumferential cavity 56 is fully filled up with the thermoplastic welding material 70 by which the housing sections 20, 22 are welded to one another. For an internal fluid connection of the two adjoining chambers 30 of the pressure vessel 10, there may be a through hole **72** provided in the partition wall 36.

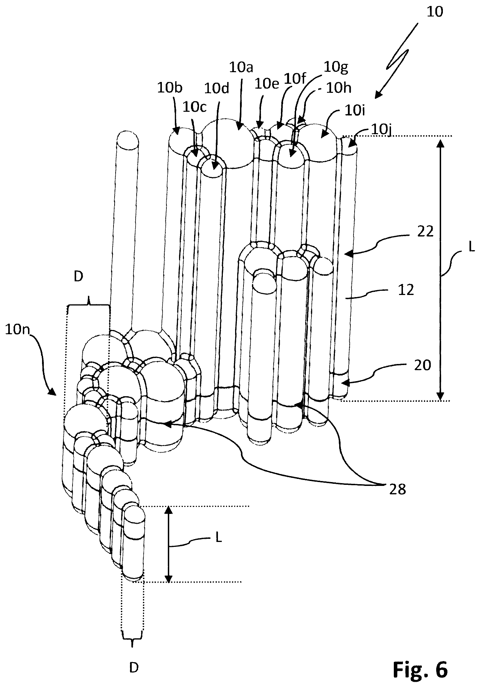

**Fig. 6** shows a perspective view of a further embodiment of the pressure vessel 10 with a rather complex external shape. The pressure vessel 10, again, comprises only two housing shells 20, 22 which are fused to one another as described in context with the embodiment illustrated in Figs. 1 to 5 above.

The pressure vessel 10 comprises a large number of vessel sections 10a, 10b, 10c, 10d, ..., 10n which are each arranged side-by side along a straight line, a curved line or round one another. Further, as can be seen from Fig. 5, the vessel sections 10a, 10b, 10c, 10d, ..., 10n may have the same or different axial length L, the same or different external diameters D . The external shape of the pressure vessel 10 can thus be easily adapted to complex, even branched mounting spaces, for instance in the engine compartment of a truck or boat or even in underfloor compartment of trucks and buses.

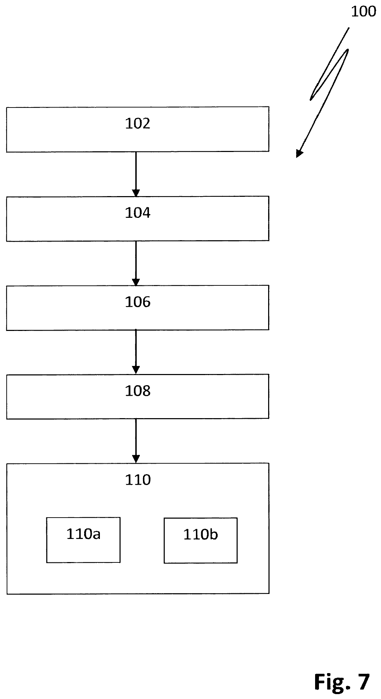

The method **100** according to the invention for a rather simple and cost-efficient manufacturing of a pressure vessel 10 for storing compressed air or gas as explained above will be described with additional reference to **Fig. 7** hereinafter. The method 100 according to the invention comprises the following steps: Injection molding **102** the first housing shell 20 and the second housing shell 22 from a thermoplastic material such that each of the housing shells 20, 22 defines at least one or several chamber sections 34a, 34b therein and such that the first and the second housing shell 20, 22 each have a free edge section 38, 40 with defect holes 58, 60 and which are configured and designed to be fitted into each other under formation of a circumferential cavity 56 extending there between. To further increase the compression and/or tensile strength of the housing wall 12 of the housing shells 20, 22, there may be short or long fibers or a combination thereof provided in the thermoplastic material used for injection molding of the two housing shells 20, 22. The fibers are thus blended in the thermoplastic material and may e.g. comprise glass fibers, carbon fibers, or other natural or synthetic fibers.

In the case that the pressure vessel 10 to be manufactured shall have several chambers 30 for storing the compressed gas or air, there may be a fluid connection formed in between adjoining chamber sections of the first or second housing shell 20, 22 by providing **104** a through hole in the partition wall section 36a or 36b of the first and/or second housing shell 20, 22 during or after the injection molding step 102.

The injection molding step 102 is followed by providing or mounting **106** on the inside of the free edge section 38 of each chamber section 34a of the first housing shell 22, a supporting ring 42 for a radial support of the free edge section 38 thereof. Mounting 106 of the supporting ring 42 may be done by press-fitting each supporting ring 42 into the chamber section 34a of the first housing shell 20 after the injection molding step 102. Alternatively, the supporting ring 42 may also be at least partially glued to the inside interior surface 44 of the housing wall 12 of the first housing shell 20. According to a further embodiment of the invention, first housing shell 20 is directly injection molded upon the respective supporting ring(s) 42 during the injection molding 102 of the housing shells 20, 22 to thereby provide the supporting ring 42 on the inside of the free edge section 38 of each chamber section 34a of the first housing shell 22.

Method step 106 is followed by fitting (inserting/mounting) **108** the edge section 38 of the first housing shell 20 into the edge section 40 of the second housing shell 22 such that the free edge section 40 of the second housing shell 22 encompasses the free edge section 38 of the first housing shell 20. When fitting the free edge sections 38, 40 of housing shells 20, 22 into one another, the housing shells 20, 22 are advantageously fitted (inserted) into one another until each of the housing shells 20, 22 abuts against the shoulder 50 of the respective other housing shell 20, 22 corresponding thereto in an axial direction. Thereby, the housing shells 20, 22 can be easily arranged in a predefined mounting position suitable for joining the two parts together.

For forming the pressure vessel 10, method step 108 is followed by fusing **110** the two housing shells 20, 22 together in the region of their interlocking free edge sections 38, 40 by hot gas welding **110a,** in particular of the adjacent free edges 52 of the free edge sections 38, 40 and the associated shoulders 50 of the respective housing shell 20, 22 and simultaneously or subsequently pressure-injecting **110b** hotmelt thermoplastic material 70 through the second defect holes 60 of the free edge section 40 of the second housing shell 22 into the cavity 56. For the hot gas welding 108a, one or more jets of hot air may be used. The thermoplastic material of the housing shells 20, 22 is softened by said jet(s) of hot air to allow for a full bonding of the free edges 52 and the shoulders 50 and of the hotmelt thermoplastic material 70 with the free edge sections 38, 40 to take place. The hotmelt thermoplastic material 70 thus serves as a filler material that cools to form a joint that can be as strong, or even stronger, than the material of the two housing shells 20, 22. Thereby, a pressure-tight fusion of the two housing shells 20, 22 can be realized.

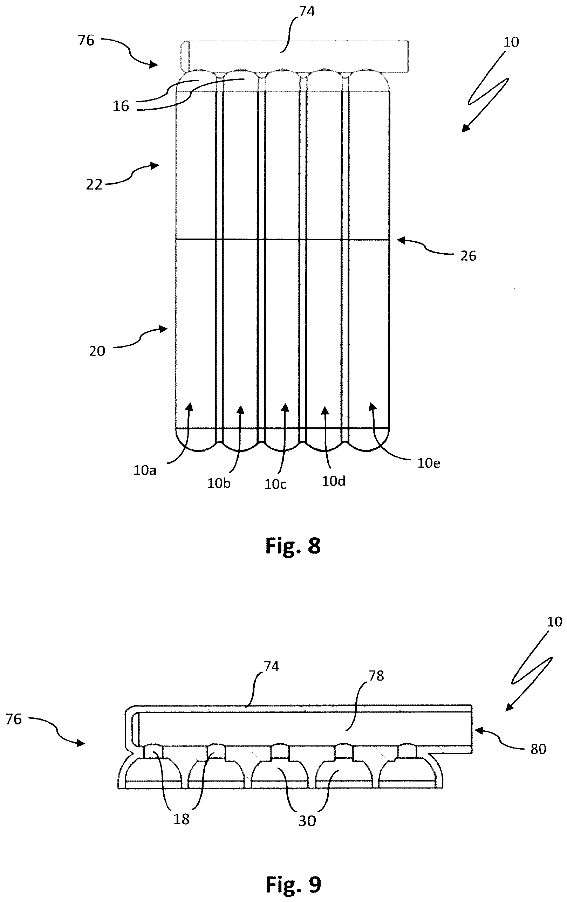

**Fig. 8** shows a further embodiment of a pressure vessel 10 according to the invention in a side view. The pressure vessel 10 comprises several, here five, vessel sections 10a, 10b, 10c, 10d, 10e. The pressure vessel 10 is comprised of a first housing shell 20 and a second housing shell 22, which are fused together in a region of a weld zone 26. The second housing shell 22 is integrally formed with a fluid rail **74.** The fluid rail 74 is provided in an upper region **76** on top of dome shaped end sections 16 of the pressure vessel 10.

**Fig. 9** is a sectional view of the upper region 76 of the pressure vessel 10 according to Fig. 8. Fluid ports 18 connect an interior space **78** of the fluid rail 74 with internal chambers 30 of the pressure vessel 10. Compressed air or gas may be fed into and out of the pressure vessel 10 through a feed opening **80** of the fluid rail 74.

## Claims

1. A method for manufacturing a pressure vessel (10) having one or several chambers (30) for storing compressed air or gas, in particular for automotive applications, comprising the following steps:
a) Injection molding (102) a first housing shell (20) and a second housing shell (22) from a thermoplastic material, each of the housing shells (20, 22) defining one or several chamber section (34a, 34b) therein and having a free edge section (38, 40), wherein the free edge sections (38, 40) of the first housing shell (20, 22) is configured and designed to be fitted into the free edge section (40) of the second housing shell (22) under formation of a cavity (56) extending therebetween, and wherein at least the free edge section (40) of the second housing shell is provided with defect holes (58, 60);
b) Mounting, on the inside of the free edge section (38) of each chamber section (34a) of the first housing shell (20), a supporting ring (42) for a radial support of the free edge section (38) thereof;
c) Fitting the free edge section (38) of the first housing shell (20) into the free edge section (40) of the second housing shell (22) such that the free edge section (38) of the second housing shell (40) encompasses the free edge section (38) of the first housing shell (20);
d) Fusing (110) the two housing shells (20, 22) together in the region of their interlocking free edge sections (38, 40) by hot gas welding (110a) and pressure-injecting (110b) hotmelt thermoplastic material (70) through the defect holes (60) of the free edge section of the second housing shell (22) into the cavity (56) thereby forming the pressure vessel (10).

2. The method according to claim 1, wherein mounting of the supporting ring (42) comprises press-fitting the supporting ring (42) into the first housing shell (20) after the injection molding step (102) or overmolding the supporting ring (42) during the injection-molding step (102).

3. The method according to claim 1, wherein the first housing shell (20) and the second housing shell (22) are each injection-molded to form a shoulder (50) for an axial abutment of the free edge section (38, 40) of the respective other housing shell (20, 22) and wherein the free edge section (38) of the first housing shell (20) is fitted into the free edge section (40) of the second housing shell (20) until the free edge section (38, 40) of each housing shell (20, 22) abuts against the shoulder (50) of the respective other housing shell (20, 22) corresponding thereto in an axial direction.

4. The method according to any of the claims 1 to 3, wherein the first housing shell and the second housing shell each form several chamber sections (34a, 34b) separated from each other by a partition wall section (36a, 36b) and further comprising the step of providing the partition wall section (36a, 36b) of the at least first or second housing shell (20, 22) with a through hole (72) for a fluidic connection between adjoining chambers (30) of the pressure vessel (10).

5. The method according to any of the preceding claims 1 to 4, wherein at least part of the chamber sections (34a, 34b) of the first and/or the second housing shell (20, 22) differ from each other in their axial length (32).

6. The method according to any of the preceding claims, wherein at least a part of the chamber sections (34a, 34b) of the fist and the second housing shell corresponding to each other have different diameters D.

7. The method according to any of the preceding claims, wherein each chamber section of the housing shells (20, 22) has a circular cross-section.

8. The method according to any of the preceding claims, wherein each supporting ring (42) is made from metal or a duroplast.

9. The method according to any of the preceding claims, wherein each supporting ring (42) has an axial height (62) which is at least equal to the extension (64) of the circumferential cavity (56) in an axial direction.

10. The method according to any of the preceding claims, wherein the first and the second housing shell (20, 22) are injection molded from a thermoplastic material containing organic or anorganic fibers.

11. A pressure vessel (10) for storing compressed air or gas, in particular for automotive applications, which is manufactured according to a method (100) according to any of the preceding claims.

12. The pressure vessel according to claim 11, wherein the pressure vessel (10) has several vessel sections (10, 10b, 10c,..., 10n) arranged side-by-side, each vessel section (10, 10b, 10c,..., 10n) defining a chamber (30) for the compressed gas.

13. The pressure vessel according to claim 12, wherein the vessel sections (10a, 10b, 10c,..., 10n) differ from each other in their respective length L.

14. The pressure vessel according to any of the preceding claims 11 to 13, wherein the pressure vessel has one or more fluid ports.
